# EUROPEAN PATENT APPLICATION

(11) **EP 1 107 545 A1**
(43) Date of publication of application: **13.06.2001**
(21) Application number: 00104537.6
(22) Date of filing: 13.03.2000
(51) Int. Cl.: H04M 1/27

(54) **Voice dialing system**

(30) Priority: 03.12.1999 JP 20552199
(71) Applicant: Chaw Khong Technology Co., Ltd., Taipei County (TW)
(72) Inventor: Huang,Shih-Wei, Taipei,R.O.C. (TW)
(74) Representative: Müller-Boré & Partner Patentanwälte

(57) **Abstract**

A voice dialing system comprises a control circuit and a connected control panel having keys to perform a predetermined function wherein the control circuit monitors a voice processing through a signal initiated by the key inputted, thereby showing a set of candidates like a true name inputted by voice on the display for verifying, implementing a voice box password verification by means of keying and a voice learning mechanism, and dialing a correct number corresponding to the verified candidate. By utilizing this, a convenient operation and encryption mechanism are realized.

## Description

### FIELD OF THE INVENTION

The present invention relates to a dialing system, and more particularly to a voice dialing system in which a set of candidates like the true name pronounced by a user are shown on display for user to select, and then automatically dials a correct number corresponding to the selected name.

### BACKGROUND OF THE INVENTION

A conventional telephone equipped with an automatic voice dialing system has a required dialing procedure for user to perform: 1) lift a handset; 2) pronounce a desired name; and 3) pronounce a "call" or "dial" command to initiate a dialing. In view of the foregoing, it is not convenient. Further, a desired number may not be dialed out if the called party has a name, which already stored in the memory of voice dialing system, pronounced similar to "call" or "dial". In addition, a voice box of such system is generally activated when user inputting a correct password by voice. In other words, the voice inputted by user is verified prior to permit user to use the voice box. The verification comprises the verification of password and the intonation for fulfilling an encryption on the voice box (i.e., the voice box is only activated by a unique user). But this is unsatisfactory because system may fail to identify the unique user if the user changes his/her intonation due to the suffering of a cold or other factors. This is a major drawback. Also, user usually input his/her password secretly in order not to be overheard by someone else for preventing voice box from revealing. This is further not convenient.

Thus, it is desirable to provide a new and improved voice dialing system in order to overcome the above drawbacks of prior art.

### SUMMARY OF THE INVENTION

It is an object of the present invention to provide a voice dialing system wherein a set of candidates like the true name pronounced by a user are shown on display for user to select prior to lifting handset, and then automatically dials a correct number corresponding to the selected name when lifting handset or a predetermined time is passed.

It is another object of the present invention to provide a voice dialing system wherein a set of candidates having a common meaning in certain portion of the voice pronounced by a user are shown on display for user to verify prior to lifting handset.

It is still another object of the present invention to provide a voice dialing system wherein intonation of the voice is verified and a change of name and/or phone number is allowable, thereby enabling the verification of persons having the same first and last names.

It is still another object of the present invention to provide a voice dialing system wherein a correct number corresponding to the verified name is dialed after a predetermined eight seconds is passed.

It is still another object of the present invention to provide a voice dialing system wherein voice box is activated by keying not by voice, thereby fulfilling the encryption of the voice box.

It is still another object of the present invention to provide a voice dialing system wherein voice box is activated by keying a number such that totally unaffected by a changed intonation.

It is still another object of the present invention to provide a voice dialing system wherein a learning mechanism is implemented for facilitating user operation with an aim to eliminating a repeat voice input procedure.

It is still another object of the present invention to provide a voice dialing system wherein an artificial intelligence feature is implemented for automatically prompting a next word for user to identify.

It is still another object of the present invention to provide a voice dialing system wherein a pick-up and dial-out is performed after verifying a set of candidates.

The above and other objects, features and advantages of the present invention will become apparent from the following detailed description taken with the accompanying drawings.

### BRIEF DESCRIPTION OF THE DRAWINGS

FIG. 1 is a front schematic view of a control panel of a device incorporating the system of a preferred embodiment of the present invention;
FIG. 2 is a circuit block diagram of the present invention;
FIG. 3 is a flow chart illustrating the overall operation of the present invention;
FIG. 4 is a flow chart illustrating the main control function setting of the system of FIG. 3;
FIG. 5 is a flow chart illustrating the password comparison performed by the voice box;
FIG. 5A schematically illustrating a password comparison procedure performed by the voice box resulting in a correct input;
FIG. 5B schematically illustrating a password comparison procedure performed by the voice box resulting in a wrong input;
FIG. 6 is a flow chart illustrating the phone book setting of the present invention;
FIG. 7 is a flow chart illustrating the voice box password setting of the present invention;
FIG. 8 is a flow chart illustrating the voice dialing operation of phone book of the present invention;
FIG. 9 is a flow chart illustrating the selection of candidates of phone book of the present invention;
FIG. 10A is a flow chart illustrating the voice dialing performed by the system of the present invention;
FIG. 10B schematically illustrating the comparison operation among three candidates; and
FIG. 11 is a flow chart illustrating adding a new entry to the phone book.

### DETAILED DESCRIPTION OF THE PREFERRED EMBODIMENTS

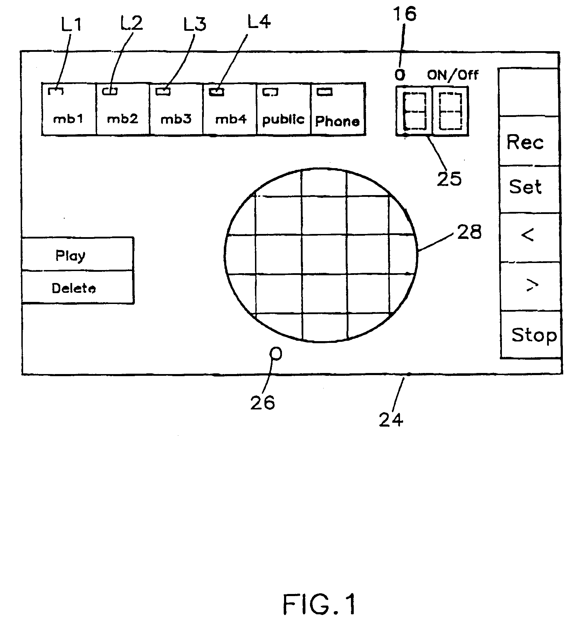

Referring to FIGS. 1-2, there is shown a control panel 24 of a device (not shown) incorporating the voice dialing system of the present invention. The control panel 24, connected to a control circuit (described later), has a plurality of keys to perform a predetermined function through the control circuit. The plurality of keys comprises a record key (REC), a setting key (SET), a decrement key (<), an increment key (>), a stop key (STOP), a number of voice box keys (mb1, mb2, mb3, and mb4) being activated by a unique password equipped with a corresponding indicator (L1-L4) thereon, public mailbox key (PUBLIC), a phone book key (PHONE), a play key (PLAY), and a delete key (DELETE). Also provided on the panel 24 are a microphone 26 for inputting a user voice, a speaker 28 for amplifying the voice converted from a corresponding entry stored in system memory, an indicator 16 for indicating the current state of the device of the present invention, and two seven-segment light emitting diode (LED) displays 25 for showing the password comparison result.

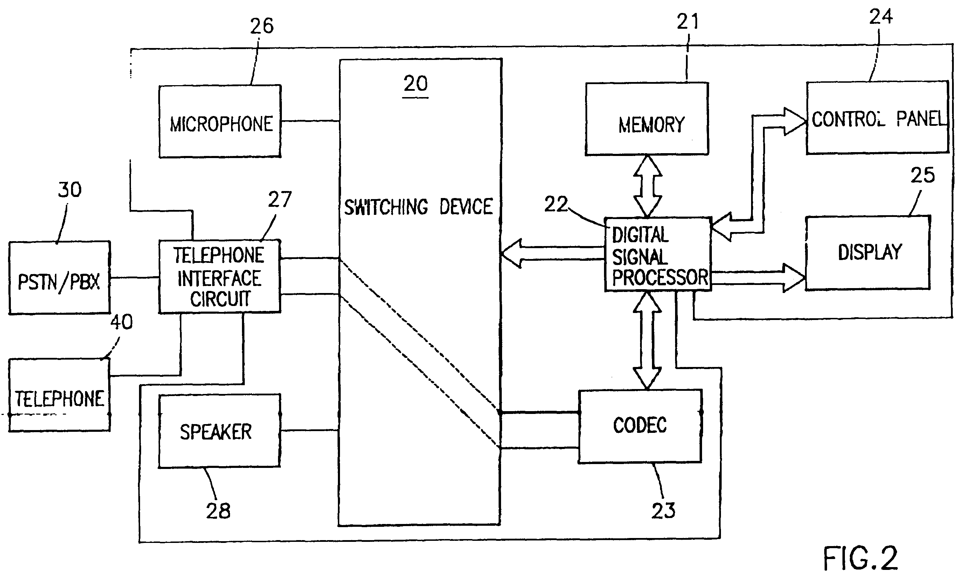

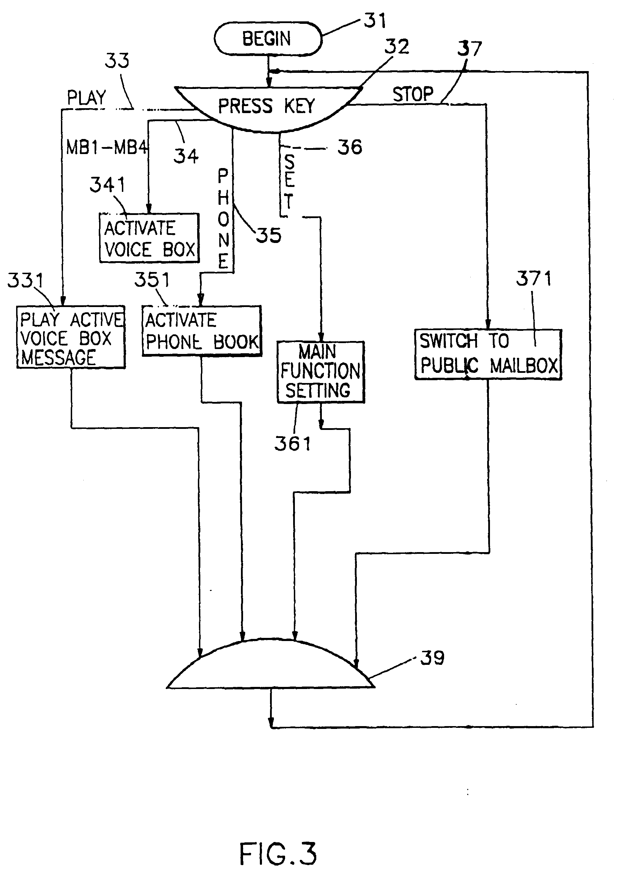

Referring to FIG. 2 specifically, the control circuit comprises a digital signal processor (DSP) 22, a memory 21, a display 25, a switching device 20, an encoder/decoder (CODEC) 23, a microphone 26, a telephone interface circuit 27, and a speaker 28 in which DSP 22 is connected to memory 21, control panel 24, display 25, CODEC 23, and switching device 20; switching device 20 connected to microphone 26, telephone interface circuit 27, and speaker 28; and telephone interface circuit 27 connected to a public switching telecommunication network (PSTN) or private branch exchange (PBX) 30, and a telephone set 40. In brief, the processing of input and output of voice box, encoding, compression, storage, decoding, and decompression of voice data of voice dialing system is initiated by DSP 22 which further in cooperation with switching device 20 for performing switching function. The processes and functions of the present invention are illustrated in FIGS. 3-11 as follows.

In FIG. 3, there is a flow chart illustrating the overall operation of the present invention. The process begins with step 31, where control immediately passes to step 32 for a user to select a desired function by holding the corresponding key on panel 24 down such as:
In 33, holding PLAY key down to play an active voice box message (step 331);
In 34, holding mb1-mb4 key down to activate a voice box function (step 341);
In 35, holding PHONE key down to activate phone book function (step 351);
In 36, holding SET key down for more than two seconds to activate main function setting (step 361); and
In 37, holding STOP key down to deactivate a running function, or automatically switch to public mailbox in a standby status (step 371).

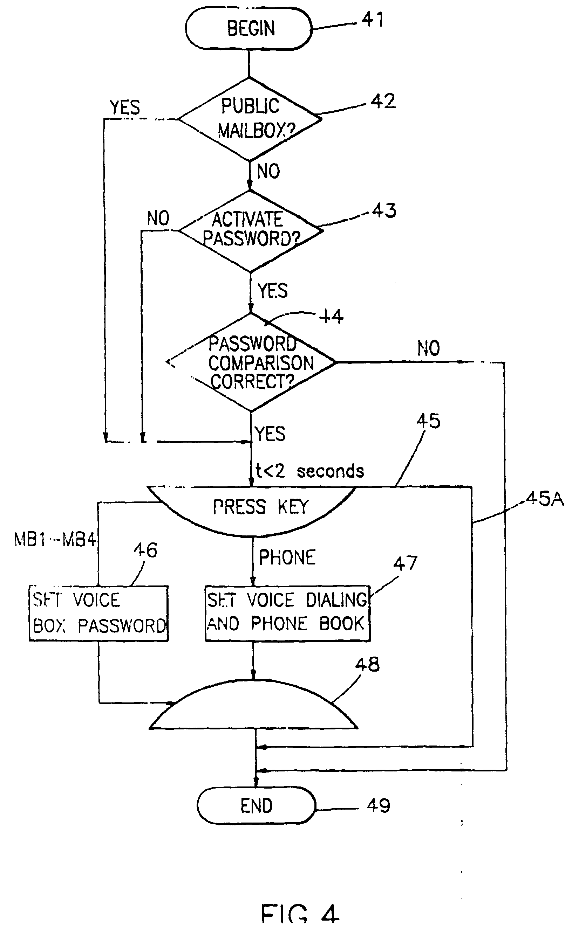

In FIG. 4, there is a flow chart illustrating the main function setting routine, i.e., the tasks performed in step 361 of FIG. 3. The process begins with step 41, where control immediately passes to step 42 to determine whether it is set as public mailbox. If yes, go to step 45. If not, go to step 43. In step 43, it is determined whether a password function is activated. If yes, go to step 44. If not, go to step 45. In step 44, it is determined whether a correct password is inputted. If yes, go to step 45. If not, go to step 49. In step 45, a number of keys are available such as holding mb1-mb4 key down to set voice box password (step 46), holding PHONE key down to set voice dialing function and phone book of each voice box (step 47), and holding any key other than above down to set a corresponding function in 45A. In step 49, the process ends.

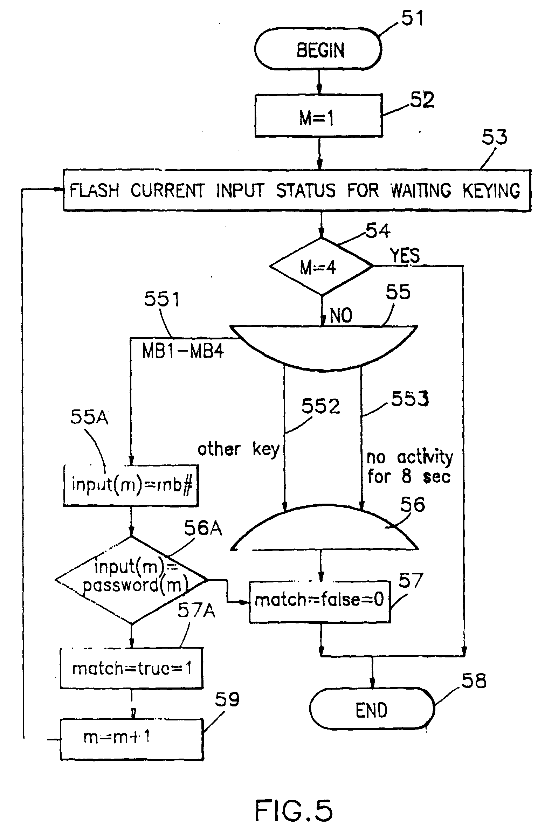

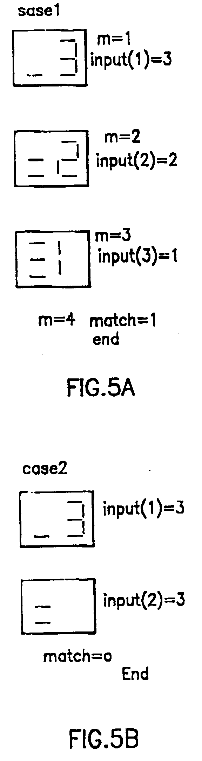

In FIG. 5, there is a flow chart illustrating the password comparison performed by the present invention. The process begins with step 51, where control immediately passes to step 52. In step 52, set variable m = 1, i.e., the least significant digit of password is one. In step 53, current input status is flashing to wait keying. In step 54, it is determined whether m is equal to four. If yes, go to step 58. If not, go to step 55 to perform a desired function such as holding one of mb1-mb4 keys down in 551 to set the mth input voice box as mb# (step 55A), and then to determine whether the mth input voice box is equal to the corresponding existing password, if yes, go to step 57A to set variable match equal to one (i.e., result is true), increase m by one (step 59), and loops back to step 53, otherwise, goes to step 57; and holding any other keys down in 552 or without holding any key down for over eight seconds to go to step 57. In step 57, set variable match equal to zero (i.e., result is false), and the process ends in step 58.

In FIGS. 5A-5B, schematically illustrates a password comparison procedure performed by the voice box. The left part of seven-segment LED display 25 represents the number of comparison (e.g., one, two, or three), while the right part represents the value of voice box. In FIG. 5A, we assume password is "321". A correct comparison result is illustrated when the first input (represented by a horizontal bar) digit is shown as three. The comparison proceeds. A further correct comparison result is illustrated when the second input (represented by two parallel horizontal bars) digit is shown as two. The comparison proceeds. A final correct comparison result is illustrated when the third input (represented by three parallel horizontal bars) digit is shown as one. As an end, the comparison result is correct (i.e., match = 1) so as to enable user to use the voice box. Similarly, In FIG. 5B, a correct comparison result is illustrated when the first input (represented by a horizontal bar) digit is shown as three. The comparison proceeds. However, an incorrect comparison result is illustrated when the second input (represented by two parallel horizontal bars) digit not equal to two as required (i.e., input a digit other than two such as illustrated three) is shown as blank. The comparison ends immediately (i.e., match = 0).

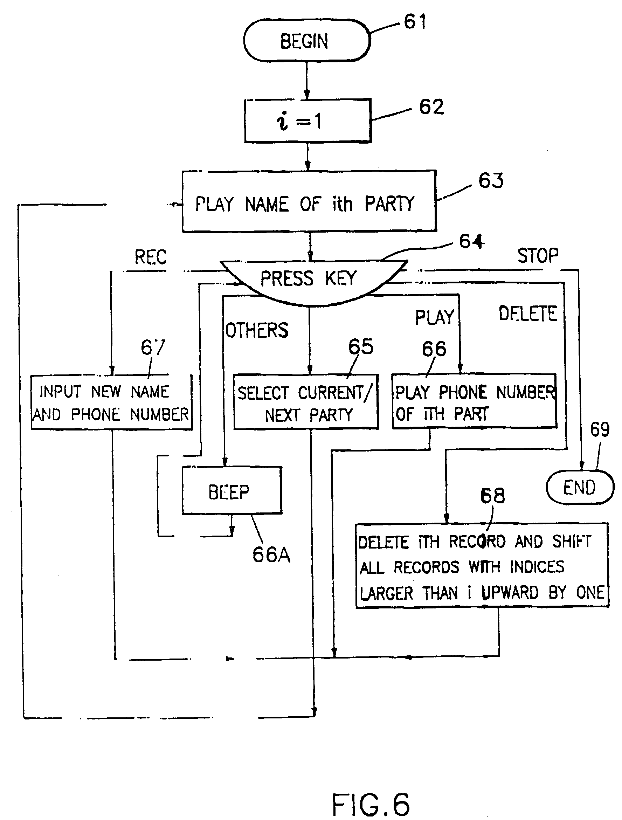

In FIG. 6, there is illustrated a flow chart of the phone book setting, i.e., set active voice box phone book. The process begins with step 61, where control immediately passes to step 62 to set variable i as one, where i is defined as the ith called party stored in memory. In step 63, play the name of ith called party. In step 64, a determination is made as which key is pressed and if STOP is pressed or no input after eight seconds the process ends (step 69), otherwise proceeds as follows. In step 65, select a current (i) or next (i+1) called party if < or > is pressed respectively and loop back to step 63. In step 66, play the telephone number of ith called party if PLAY is pressed and loop back to step 63. In step 67, input name and telephone number of new entry by voice if REC is pressed and loop back to step 63. In step 68, delete ith record and shift all records with indices larger than I upward one position, i.e., decrease index by one and loop to step 63. In step 66A, a beep is generated if any key other than above is pressed and loop back to step 64.

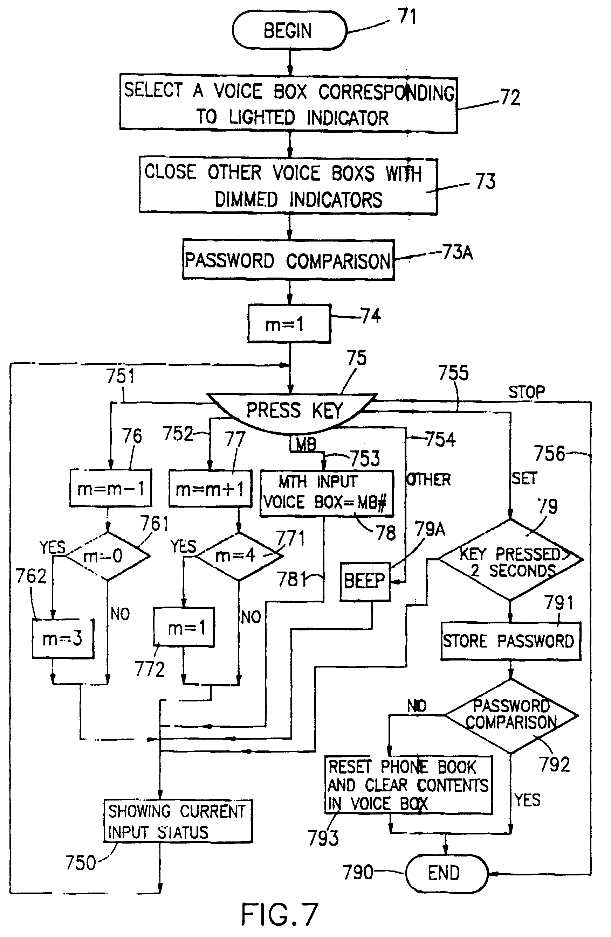

FIG. 7 is a flow chart illustrating the voice box password setting, i.e, the tasks performed in step 46 of FIG. 4. The process begins with step 71, where control immediately passes to step 72 to select a voice box corresponding to a lighted indicator (e.g., mb1 corresponding to L1). In step 73, close other voice boxes with dimmed indicators. In step 73A, conduct a password comparison. In step 74, set variable m as one. In step 75, a determination is made as which key is pressed. In step 76, let m = m-1, i.e., variable m is decreased by one if < key is selected in 751. In step 761, a determination is made as whether variable m is equal to zero. If yes, let m = 3. If not, go to step 750. In step 77, let m = m+1, i.e., variable m is increased by one if > key selected in 752. In step 771, a determination is made as whether variable m is equal to four. If yes, let m = 1. If not, go to step 750. In step 78, let mth input voice box as mb# if the voice box mb# is pressed in 753 and then go to step 750. In step 79, a determination is made as whether pressing key over two seconds. If yes, store password (step 791). If not, go to step 750. In step 792, a determination is made as whether password comparison is correct. If yes, go to step 790. If not, reset phone book and clear the contents in voice box (step 793) and go to step 790. In step 79A, a beep is generated if any key other than above is pressed and go to step 750. In step 750, show the current input status and loop back to step 75. In step 790, the process ends.

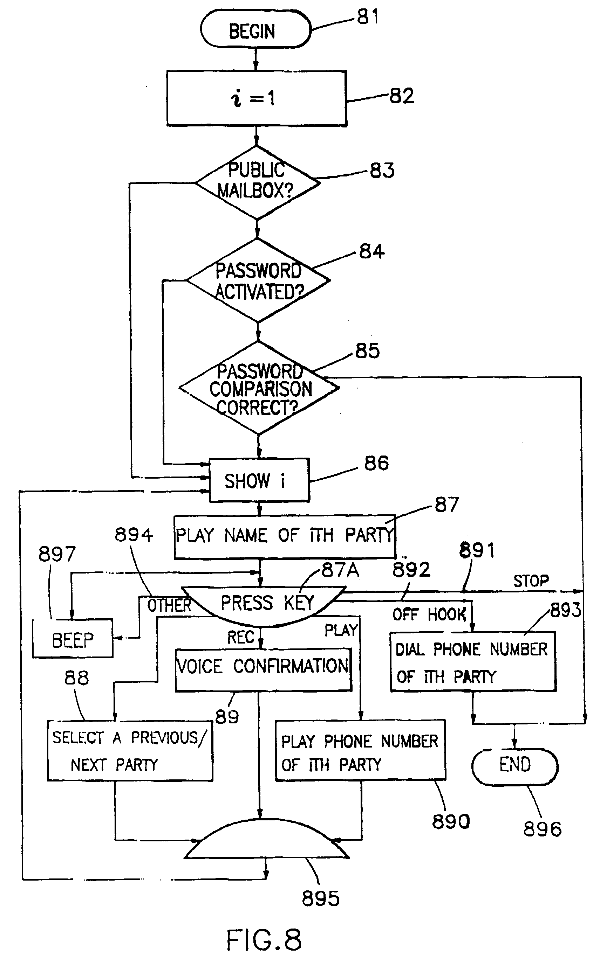

FIG. 8 is a flow chart illustrating the voice dialing operation of phone book. The process begins with step 81, where control immediately passes to step 82 to set variable i as one, where i is defined as the ith called party stored in memory. In step 83, a determination is made as whether it is a public mailbox. If yes, go to step 86. If not, go to step 84. In step 84, a determination is made as whether password is activated. If yes, go to step 85. If not, go to step 86. In step 85, a password comparison is made. If correct, go to step 86. If not, go to step 896. In step 86, display variable i. In step 87, play the name of ith called party. In step 87A, a determination is made as which key is pressed. In step 88, select a previous or next called party if a < or > is pressed. In step 89, perform a voice confirmation if REC is pressed and go to step 895. In step 890, play the telephone number of ith called party and go to step 895. In 891, go to step 896 if STOP is pressed. In 892, dial the telephone number of ith called party if handset is lifted (OFF HOOK) or no action being taken over eight seconds (step 893). In step 897, a beep is generated if any key other than above is pressed (i.e., REC, PLAY, OFF HOOK, and STOP excluded) and loop back to step 87A. In step 896, the process ends.

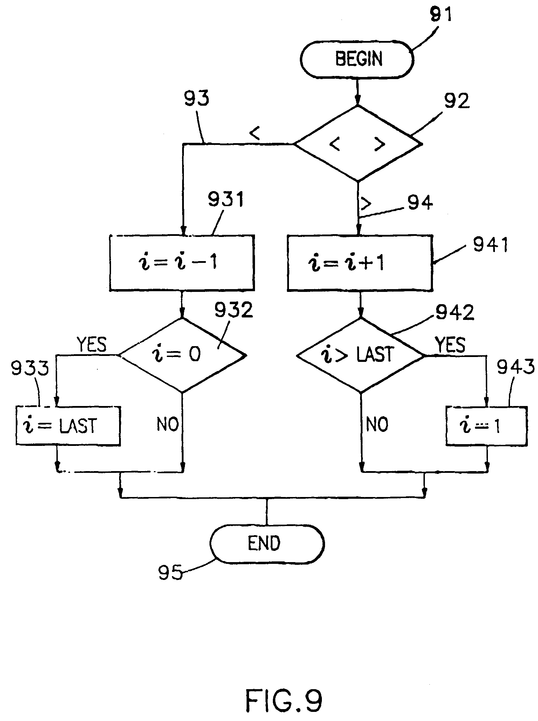

FIG. 9 is a flow chart illustrating the selection of a previous or next candidate of phone book. The process begins with step 91, where control immediately passes to step 92 to determine < or > is pressed. If < is pressed (93), go to step 931. If > is pressed (94), go to step 941. In step 931, decrease i by one and go to step 932. In step 932, a determination is made as whether i is equal to zero. If yes, set i as the last called party. If not, go to step 95. In step 941, increase i by one and go to step 942. In step 942, a determination is made as whether i is larger than the last called party. If yes, set i as one. If not, go to step 95. In step 95, the process ends.

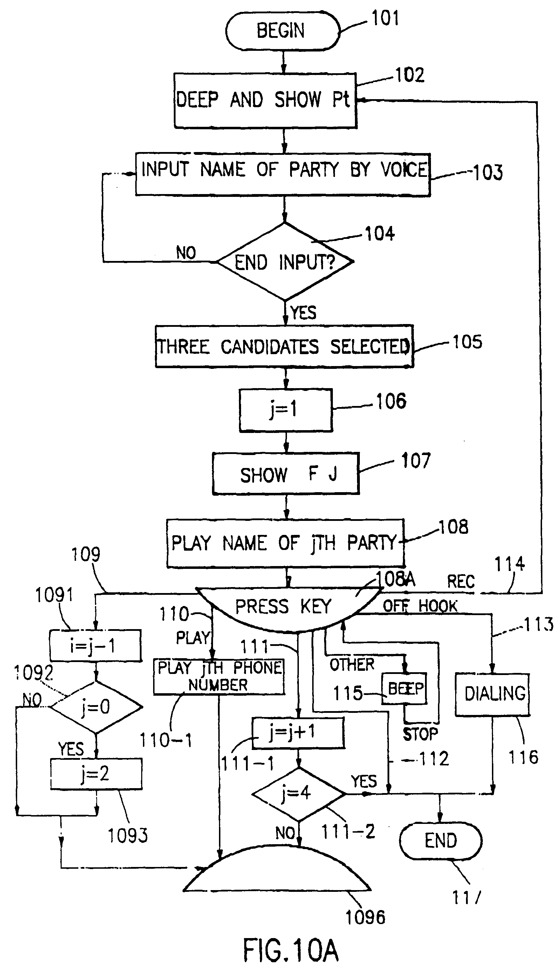

FIG. 10A is a flow chart illustrating the voice dialing of the present invention, i.e., the tasks performed by in step 89 of FIG. 8. The process begins with step 101, where control immediately passes to step 102 to generate a beep sound and show a Pt on display. In step 103, input the name of called party by voice. In step 104, a determination is made as whether input is over. If yes, go to step 105. If not, loop back to step 103. In step 105, a number of predetermined candidates (e.g., three) like the true name pronounced by user are selected. In step 106, set variable j as one, i.e., set the first candidate as called party. In step 107, show Fj on display. In step 108, play the name of jth called party. In step 108A, a determination is made as which key is pressed. In step 1091, set i = j-1 if a < is pressed. In step 1092, a determination is made as whether j is equal to zero. If yes, set j = 2 in step 1093. If not, go to step 1096. In step 110-1, play the jth telephone number if PLAY is pressed and then go to step 1096. In step 111-1, set j = j+1 if a > is pressed. In step 111-2, a determination is made as whether j is equal to four. If yes, go to step 117. If not, go to step 1096. The process goes to step 117 if STOP is pressed. The process loops back to step 102 if REC is pressed. In step 116, dial the telephone number of ith called party if handset is lifted (OFF HOOK) or no action being taken over eight seconds and then go to step 117. In step 115, a beep is generated if any key other than above is pressed (i.e., REC, PLAY, OFF HOOK, and STOP excluded) and loop back to step 108A. In step 117, the process ends.

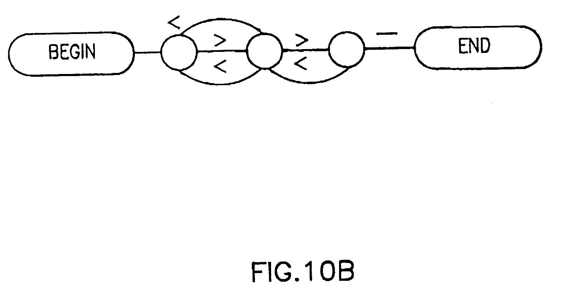

FIG. 10B schematically illustrates the comparison operation among three candidates in order to confirm the right candidate. Again, we assume password is a three-digit number. In state 1, a comparison is made between first candidate (j=1) and password. The comparison proceeds to state 2 when either < or > is pressed. In state 2, a comparison is made between second candidate (j=2) and password. The comparison proceeds to state 3 when > is pressed(j = j+1), or alternatively goes back to state 1 when < is pressed (j = j-1). In state 3, the process goes back to state 2 when < is pressed (j = j-1), or alternatively proceeds to end when > is pressed.

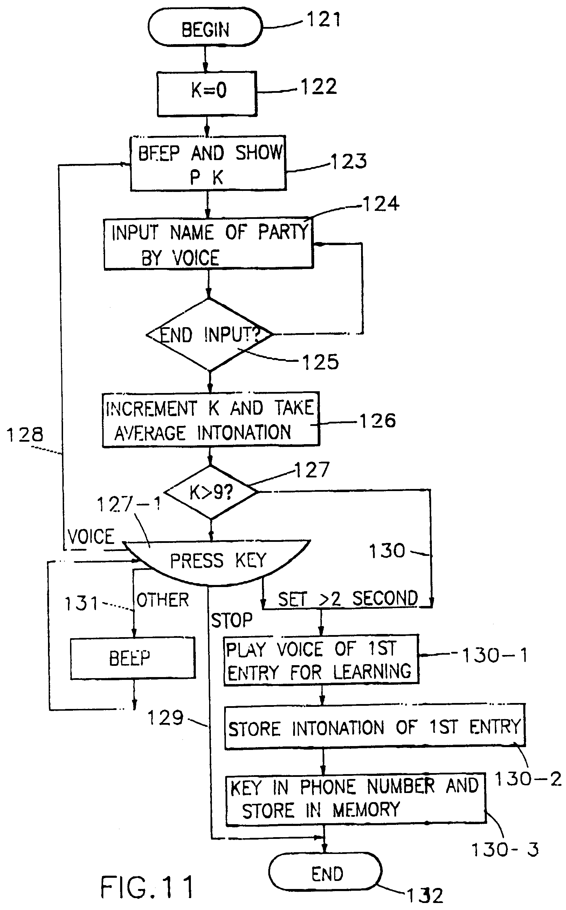

FIG. 11 is a flow chart illustrates the adding of a new entry to the phone book. The process begins with step 121, where control immediately passes to step 122 to set k = 0. In step 123, generate a beep sound and show a PK on display. In step 124, input the name of called party by voice and record it in memory. In step 125, a determination is made as whether voice input is complete. If yes, go to step 126. If not, goes back to step 124. In step 126, set k = k+1 and take the average intonation. In step 127, a determination is made as whether k is larger than nine. If yes, go to step 130-1. If not, go to step 127-1. In step 127-1, a determination is made as which key is pressed. The process loops back to step 123 if a new voice (VOICE) input. The process goes to step 132 if STOP is pressed. The process goes to step 130-1 if SET is pressed over two second. In step 130-1, play the voice of first entry for system to learn. In step 130-2, store the intonation of first entry in memory. In step 130-3, key in telephone number and store it in memory. The process goes to step 132. In step 131, a beep is generated if any key other than above is pressed (i.e., VOICE, STOP, and SET excluded) and loop back to step 127-1. In step 132, the process ends.

While the invention herein disclosed has been described by means of specific embodiments, numerous modifications and variations could be made thereto by those skilled in the art without departing from the scope of the invention set forth in the claims.

## Claims

1. A voice dialing system, comprising:
a control circuit having a digital signal processor, a memory, a display, a switching means, an encoder/decoder, a microphone, a telephone interface circuit, and a speaker; and
a control panel connected to the control circuit having a plurality of keys to perform a predetermined function through the control circuit;
wherein the digital signal processor monitors an operation of the control circuit and a voice processing through a signal initiated by the key inputted, thereby showing a set of candidates like a true name inputted by voice on the display for verifying; implementing a voice box password verification by means of keying and a voice learning mechanism; and dialing a correct number corresponding to the verified candidate.

2. The system according to claim 1, further comprising a phone book for learning a plurality of intonations of the voice input and taking an average of the intonations.

3. The system according to one or more of the proceeding claims, wherein the set of candidates having a common meaning in certain portion of the voice are shown on the display for verifying prior to dialing.

4. The system according to one or more of the proceeding claims, wherein the voice learning mechanism may facilitate operation for eliminating a repeat voice input.

5. The system according to one or more of the proceeding claims, wherein the intonations of the voice are verified and a change of name and/or phone number is allowable, thereby enabling the verification of persons having the same first and last names.

6. The system according to one or more of the proceeding claims, wherein a correct number corresponding to the verified candidate is dialed after a predetermined time is passed or after a handset is lifted.

7. The system according to one or more of the proceeding claims, wherein the predetermined time is eight seconds.

8. The system according to one or more of the proceeding claims, further comprising a plurality of voice boxes and a public mailbox for enabling an encryption on the public mailbox by means of keying.

9. The system according to one or more of the proceeding claims, further comprising an artificial intelligence mechanism for automatically prompting a next word fo user to identify during the verification.

10. The system according to one or more of the proceeding claims, wherein the display is comprised of a left and a right seven-segment light emitting diodes (LEDs).

11. The system of claim 10, wherein the left LED represents a comparison times, the right LED represents a value of the voice box password consisting of a number of digits, and the comparison is performed sequentially from a least significant digit of the voice box password until reaching a most significant digit thereof or a mismatch is found.

12. The system of claim 11, wherein the comparison times is three with a first comparison represented by one bar, a second comparison represented by two bars, and a third comparison represented by three bars.

13. The system of claim 11 or 12, further comprising the step of clearing a contents of the voice box for inputting the voice box password again after the mismatch.
